# EUROPÄISCHE PATENTSCHRIFT

(11) **EP 2 870 297 B1**
(45) Veröffentlichungstag und Bekanntmachung des Hinweises auf die Patenterteilung: **31.08.2016**
(21) Anmeldenummer: 13729656.2
(22) Anmeldetag: 10.06.2013
(51) Int. Cl.: E02D 27/42

(54) **FUNDAMENT FÜR WINDENERGIEANLAGEN**
FOUNDATION FOR WIND MOTOR
FONDATION D'UNE AÉOLIÈNNE

(30) Priorität: 06.07.2012 DE 102012211888
(43) Veröffentlichungstag der Anmeldung: 13.05.2015
(73) Patentinhaber: Wobben Properties GmbH, 26607 Aurich (DE)
(72) Erfinder: ALBERS, Karsten, 26759 Hinte (DE); EGBERTS, Hendrik, 26723 Emden (DE); MEYER, Ingo, 26639 Wiesmoor (DE); SOUSA, Sérgio, P-4970-220 Arcos De Valdevez (PT)
(74) Vertreter: Eisenführ Speiser
(86) Internationale Anmeldenummer: PCT/EP2013/061869
(87) Internationale Veröffentlichungsnummer: WO 2014/005795

(56) Entgegenhaltungen:
- DE-A1-102010 028 038

## Beschreibung

Die vorliegende Erfindung betrifft eine Vorrichtung zur Herstellung von Bewehrungskörben für Turmsegmente. Sie betrifft insbesondere eine Vorrichtung zur Herstellung von Bewehrungskörben für Turmsegmente von Windenergieanlagen. Eine gattungsgemäße Vorrichtung ist aus DE 10 2010 028 038 A1 bekannt.

Türme, wie sie unter anderem für Windenergieanlagen zur Anwendung kommen, haben oftmals eine Wandung aus Beton bzw. Stahlbeton. Insbesondere bei dynamisch belasteten Türmen, was auf die meisten Türme aufgrund der Windeinflüsse zutrifft, werden zur Verbesserung der Stabilität zusätzlich versteifende Strukturen, sogenannte Bewehrungskörbe, im Inneren der Turmwandung vorgesehen. Die Konstruktion eines Turms ist hierbei segmentartig aufgebaut, d. h., ein Turm wird zusammengesetzt aus mehreren übereinanderzulegenden, im Wesentlichen ringförmigen Turmsegmenten.

In der Herstellung solcher Turmsegmente wird zunächst der Bewehrungskorb hergestellt und sodann mit Beton in dafür vorgesehene Formen umfüllt und ausgehärtet.

Bei bekannten Vorrichtungen zur Herstellung von Bewehrungskörben für Turmsegmente ist eine Tragstruktur vorgesehen, welche eine Vielzahl von Stangen, sogenannten Rechen, hält. Diese Stangen weisen jeweils Aufnahmen zur Aufnahme von Stahllitzen auf, wobei die Stahllitzen um die Tragstruktur herum geführt werden, um Ringelemente zu bilden. Diese Ringelemente werden, stabilisiert von den Stangen, mit orthogonal dazu verlaufenden, bogenförmig vorgeformten Stahlelementen verknüpft, wodurch ein gitterförmiger Bewehrungskorb entsteht. Die Bewehrungslitzen werden entweder in einer Kreisbewegung um eine stationäre Tragstruktur herumgeführt oder, was bevorzugt ist, befinden sich in einer stationären Zuführeinrichtung und werden von der rotatorisch antreibbaren Tragstruktur aus der Aufnahme gezogen und legen sich infolge der Rotationsbewegung der Tragstruktur ringförmig um diese herum. Während der gesamten Zeit wird die Form der ringförmigen Stahilitzen von der Tragstruktur und den Stangen mittels einer Vielzahl von Speichen stabilisiert, die sich zwischen der Tragstruktur und den Stangen erstrecken. Zum Entfernen der Bewehrungskörbe aus der Vorrichtung müssen die Speichen bei bekannten Systemen jeweils zurückgerüstet oder die stabilisierenden Stangen einzeln und manuell aus den Stahllitzen ausgehakt werden.

Während die derart arbeitenden Vorrichtungen im Allgemeinen Bewehrungskörbe mit zufriedenstellender Qualität hervorbringen, wird es als Nachteil angesehen, dass hierbei ein hoher manueller Arbeitsaufwand, insbesondere zum Lösen der Bewehrungskörbe von den Vorrichtungen erforderlich ist.

Der Erfindung lag somit die Aufgabe zugrunde, eine Vorrichtung zur Herstellung von Bewehrungskörben für Turmsegmente anzugeben, welche die Herstellung von Bewehrungskörben mit gleichbleibender oder höherer Qualität in kürzerer Zeit ermöglicht.

Die Erfindung löst die ihr zugrunde liegende Aufgabe bei einer Vorrichtung der eingangs genannten Art mit den Merkmalen von Anspruch 1. Insbesondere löst die Erfindung die ihr zugrunde liegende Aufgabe mit einer Vorrichtung zur Herstellung von Bewehrungskörben für Turmsegmente, insbesondere für Turmsegmente von Windenergieanlagen, mit einer Tragstruktur, die um eine Achse X rotatorisch antreibbar ist, einer Vielzahl von Stangen, die parallel zu der Achse X ausgerichtet und entlang eines Umfangs vorzugsweise gleichmäßig um die Tragstruktur herum verteilt sind, wobei jede der Stangen mittels zwei oder mehr Speichen mit der Tragstruktur verbunden ist und an ihrer äußeren, von der Tragstruktur abgewandten Seite eine Vielzahl von Aussparungen aufweist, welche zur Aufnahme von Bewehrungsmaterial eingerichtet sind, jeweils eine Anzahl von Speichen entsprechend der Anzahl der Stangen in einer Ebene senkrecht zur Achse angeordnet sind und die Speichen teleskopartig in ihrer Länge motorisch verstellbar sind. Die Erfindung setzt hierbei da an, dass ein motorischer Antrieb aller Speichen es ermöglicht, diese nach erfolgter Erzeugung des Bewehrungskorbes ohne manuelles Eingreifen einzufahren, d. h. den von den Speichen aufgespannten Durchmesser derart zu verringern, dass der Bewehrungskorb nach oben aus der Vorrichtung entnehmbar ist. Diese Lösung liefert zugleich einen weiteren bedeutenden Vorteil: Der von den Speichen aufgespannte Durchmesser ist nicht nur zu Zwecken der Bewehrungskorbentnahme verringerbar, sondern es kann vielmehr die motorische Verstellung der Speichenlänge dazu verwendet werden, bereits vor der Bewehrungskorbherstellung unterschiedliche Durchmesser für den herzustellenden Bewehrungskorb vorzugeben. Es ist mit anderen Worten mit ein und derselben Vorrichtung bereits allein nur aufgrund des motorischen Antriebs möglich, Bewehrungskörbe für Turmsegmente unterschiedlicher Turmgrößen und Segmente für unterschiedliche Turmhöhen zu fertigen; Türme von Windenergieanlagen laufen vom Fundament aus gesehen in Richtung der Gondel im Allgemeinen verjüngt zu. Die Turmsegmente sitzen hierbei entweder stufenförmig aufeinander oder, was bevorzugt ist, sind konisch ausgebildet. Jedes weitere oben auf bestehende Turmsegmente aufgesetzte Turmsegment erfordert somit einen Bewehrungskorb mit geringer werdendem Korbdurchmesser. Anstelle des Umrüstens der Vorrichtung auf den jeweiligen Durchmesser oder anstelle des Vorhaltens von Vorrichtungen für jeden einzelnen Turmsegmentdurchmesser bzw. Bewehrungskorbdurchmesser für jedes Turmsegment erlaubt es die Erfindung, mit ein und derselben Vorrichtung eine Vielzahl von verschiedenen Durchmessern von Bewehrungskörben vorzugeben. Bei einem Windenergieanlagenturm, der aus acht Turmsegmenten besteht, wären mit im Stand der Technik bekannten Vorrichtungen insgesamt acht verschiedene Arbeitsstationen zum Erzeugen acht verschiedener Bewehrungskörbe notwendig gewesen. Die Erfindung erlaubt es, die Anzahl von Vorrichtungen für die Herstellung der Bewehrungskörbe in diesem Beispiel auf zwei zu reduzieren. Neben der gesteigerten Zeiteffizienz in der Herstellung der Bewehrungskörbe wird hierdurch auch fertigungstechnisch ein enormes Einsparpotenzial realisiert.

Die Erfindung wird dadurch vorteilhaft weitergebildet, dass die Länge jeweils aller Speichen in einer Ebene synchron verstellbar ist. Hierdurch werden zwei Vorteile erreicht. Zum einen wird durch das synchrone Verstellen jeweils aller Speichen in einer Ebene sichergestellt, dass die Speichen in dieser Ebene mit ihren äußeren Enden einen Kreisumfang gewährleisten. Zum anderen bedeutet dies, dass nicht alle Speichen an der Tragstruktur auf ein und dieselbe Länge festgelegt sind, sondern dass vielmehr die Speichen in einer jeweiligen Ebene dieselbe Länge haben, während die Speichen in einer benachbarten Ebene eine andere Länge aufweisen können, die wiederum jeweils synchron für alle Speichen der entsprechenden Ebene einstellbar ist. Hierdurch können auch konische Bewehrungskörbe erzeugt werden, was insbesondere im Hinblick auf die Türme von Windenergleanlagen besonders bevorzugt ist.

Vorzugsweise ist die Länge der Speichen stufenlos verstellbar. Hierbei wird auch eine Verstellung der Länge der Speichen in Schritten von wenigen Millimetern, beispielsweise drei bis vier Millimeter pro Schritt, als stufenlos verstanden, was angesichts der großen Durchmesser, die die Bewehrungskörbe für Turmsegmente aufweisen, auch aus sich heraus verständlich ist.

Gemäß einer bevorzugten Ausführungsform der Erfindung weist die Vorrichtung eine zentrale Antriebseinheit oder eine zentrale Antriebseinheit für jede Ebene von Speichen auf, die jeweils zum motorischen Verstellen der Speichen eingerichtet ist und an welche für jede Speiche ein Getriebe gekoppelt ist, welches von der Antriebseinheit synchron antreibbar ist. Gemäß der ersten Alternative dieser bevorzugten Ausführungsform ist eine einzige Antriebseinheit dazu vorgesehen, mittels entsprechender Kraftübertragungsglieder den synchronen Antrieb aller Speichen der Vorrichtung zu gewährleisten. Jede Antriebsbewegung der zentralen Antriebseinheit führt erfindungsgemäß zu einer Längenänderung der Speichen um den gleichen Längenbetrag. Diese mechanisch erzwungene Synchronisation kann verwendet werden, um sowohl zylindrische Bewehrungskörbe als auch konisch verjüngte Bewehrungskörbe herzustellen, indem die Speichen ihrer jeweiligen Ebene auf eine für die jeweilige Ebene relevante Grundlänge eingestellt sind. Die unterschiedlichen Grundlängen definieren den Winkel der Verjüngung, weil sie einen unterschiedlichen Durchmesser für jede Ebene definieren. Werden die Speichen aller Ebenen durch die zentrale Antriebseinheit um den gleichen Auslenkungsbetrag verändert, ergibt sich eine Veränderung des Durchmessers, da alle Ebenen sich gleichmäßig geändert haben, allerdings nicht des Verjüngungswinkels.

Gemäß der zweiten Alternative dieser bevorzugten Ausführungsform ist jede Ebene von Speichen separat von einer eigenen Antriebseinheit motorisch antreibbar. Hierdurch lassen sich die Speichen der jeweiligen Ebenen untereinander synchron, aber im Vergleich zu den übrigen Ebenen unabhängig verstellen. Hierdurch können Bewehrungskörbe mit unterschiedlichen Verjüngungswinkeln hergestellt werden.

Die bevorzugte Ausführungsform wird dadurch weitergebildet, dass die Antriebseinheit eine Welle mit einem oder mehreren Zahnrädern aufweist und die Getriebe der Speichen jeweils mittels Rollenketten an die Welle gekoppelt sind. Gemäß einer bevorzugten Alternative ist die Antriebseinheit ein Hydraulikantrieb, und jede Speiche weist einen hydraulisch betätigten, von dem Hydraulikantrieb mit Druck beaufschlagbaren Kolben zur Längenverstellung auf.

Gemäß einer weiteren bevorzugten Weiterbildung der Erfindung weist die Vorrichtung ein dezentrales Antriebssystem zur motorischen Längenverstellung auf, und zwar vorzugsweise derart, dass jede Speiche eine eigene Antriebseinheit aufweist. Vorzugsweise wird der jeweilige Antrieb für alle Speichen in einer Ebene oder für alle Speichen von einer elektronischen Steuereinheit synchron gesteuert. Der apparative Mehraufwand, den die größere Anzahl einzelner Antriebe bedeutet, wird dadurch kompensiert, dass kein zentrales, alle Speichen betätigendes Antriebssystem und Getriebesystem erforderlich ist. Die Befehlsübermittlung an die jeweiligen Antriebseinheiten können mittels elektronischer Steuerbefehle mit geringem Aufwand synchron angesteuert werden, da es mit einfachen technisch bekannten Mitteln möglich ist, allen Antriebseinheiten den gleichen Steuerbefehl zur gleichen Zeit zu übermitteln.

Vorzugsweise weist gemäß dieser Ausführungsform jede Speiche einen Teleskopspindelantrieb, einen magnetischen Linearantrieb oder einen Zahnstangenantrieb auf. Alle diese Antriebssysteme können auf vorteilhafte Weise mittels elektronisch ansteuerbarer Stellmotoren betrieben werden.

Gemäß einer weiteren bevorzugten Ausführungsform der Erfindung ist die elektronische Steuereinheit dazu eingerichtet, die zentrale Antriebseinheit oder die Antriebseinheit für jede Ebene von Speichen oder jede der dezentralen Antriebseinheiten derart anzusteuern, dass jede Ebene von Speichen einen vorbestimmten Kreisdurchmesser am äußeren Ende der Speichen definiert.

Gemäß einer weiteren bevorzugten Weiterbildung der erfindungsgemäßen Vorrichtung sind die Stangen durch mechanisches Entkoppeln von allen bis auf jeweils eine Speiche aus ihrer in Bezug auf die Tragstruktur parallelen Lage oder ihrer konisch aufeinander zulaufenden Lage in eine andere, relativ zur Ursprungslage angewinkelte Lage klappbar.

Weiter vorzugsweise sind die Stangen mittels jeweils eines Koppelglieds an den Speichen befestigt, wobei die Koppelglieder zum Verschwenken der Stangen in Richtung der Achse X und simultan zur Verringerung des Umfangs eingerichtet sind, entlang dessen die Stangen angeordnet sind. Gemäß einer weiteren bevorzugten Ausführungsform sind pro Ebene der Speichen zwei oder mehr, vorzugsweise alle, Koppelglieder motorisch zur Ausführung der Verschwenkbewegung antreibbar.

Gemäß einer weiteren bevorzugten Ausführungsform ist pro Stange mindestens eines dieser Koppelglieder mittels eines Sperrkörpers blockierbar, wobei der Sperrkörper wahlweise in eine Sperrposition oder eine Freigabeposition bewegbar ist, vorzugsweise mittels Verschwenken.

Besonders bevorzugt ist der Sperrkörper dabei dazu eingerichtet, sich In der Sperrposition bogenförmig um das Koppelglied herum zu erstrecken und einen Spalt zwischen Speichen und Stange zu verschließen, wobei die Form des Sperrkörpers zu der Form des Spaltes korrespondierend ausgebildet ist.

Die Erfindung wird im Folgenden anhand bevorzugter Ausführungsbeispiele und unter Bezugnahme auf die beigefügten Figuren näher beschrieben. Hierbei zeigen:
- Fig. 1: eine räumliche Darstellung der Vorrichtung gemäß einem ersten Ausführungsbeispiel der Erfindung,
- Fig. 2: eine Seitenansicht der Vorrichtung gemäß Fig. 1,
- Fig. 3: eine Prinzipskizze eines Details aus Figur 2,
- Fig. 4: eine räumliche Darstellung eines Details der Vorrichtung gemäß einem weiteren Ausführungsbeispiel,
- Fig. 5 und 6: Seiten- und Querschnittsansichten eines Teils der Vorrichtung gemäß einem weiteren Ausführungsbeispiel der Erfindung,
- Fig. 6 und 7: eine Detailansicht der erfindungsgemäßen Vorrichtung gemäß einem weiteren Ausführungsbeispiel in unterschiedlichen Betriebszuständen, und
- Fig. 8: eine räumliche Detailansicht der erfindungsgemäßen Vorrichtung gemäß einem weiteren Ausführungsbeispiel.

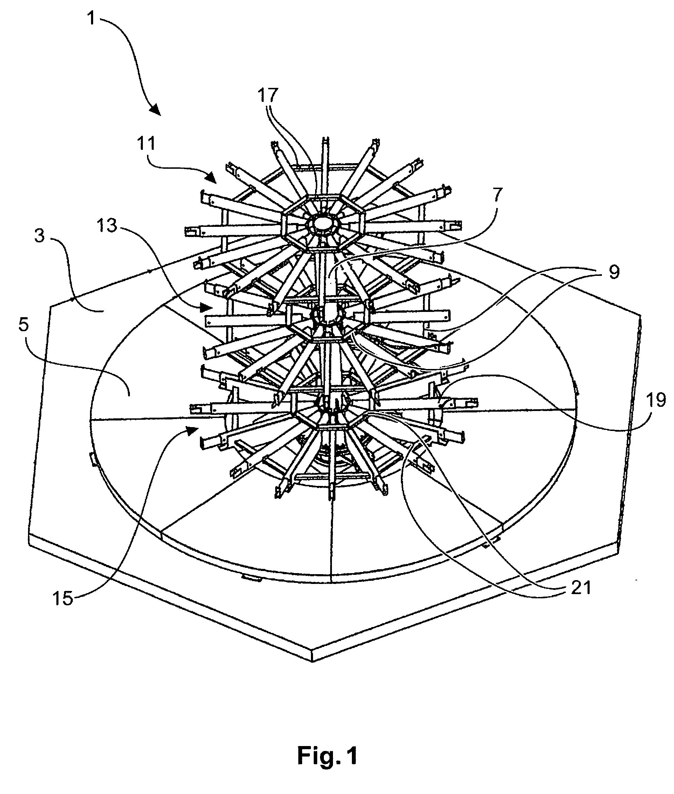

In Fig. 1 ist der grundsätzliche Aufbau einer Vorrichtung zur Herstellung von Bewehrungskörben für Turmsegmente gezeigt. Die Vorrichtung 1 weist eine stationäre Grundplatte 3 auf, relativ zu welcher eine rotatorisch antreibbare Plattform 5 angeordnet ist. Vorzugsweise ist die rotatorisch antreibbare Plattform 5 auf der stationären Grundplatte 3 gelagert. Von der Plattform 5 senkrecht ausgehend erstreckt sich eine Tragstruktur 7. An der Tragstruktur 7 sind in insgesamt drei Ebenen 11, 13, 15 jeweils eine Vielzahl von Speichen 19 angeordnet. Die Speichen 19 erstrecken sich von der Tragstruktur nach außen. Im gezeigten Ausführungsbeispiel sind die Speichen 19, von denen der Übersichtlichkeit halber nur eine mit Bezugszeichen versehen ist, sternförmig ausgerichtet. Andere Ausrichtungen sind allerdings ebenfalls möglich, solange eine Längenverstellung der Speichen zu einem geänderten Umfang der die Speichen umlaufenden gedachten Begrenzungen führt. Die Speichen in der obersten Ebene 11 sind mittels Querstreben 17 miteinander zur Versteifung verbunden. Die Speichen in der zweiten Ebene 13, die von der ersten Ebene 11 beabstandet angeordnet ist, sind mittels Querstreben 9 zur Versteifung miteinander verbunden, und die Speichen in der dritte Ebene 15, die von der zweiten Ebene 13 beabstandet angeordnet ist, sind mittels Querstreben 21 zur Versteifung miteinander verbunden.

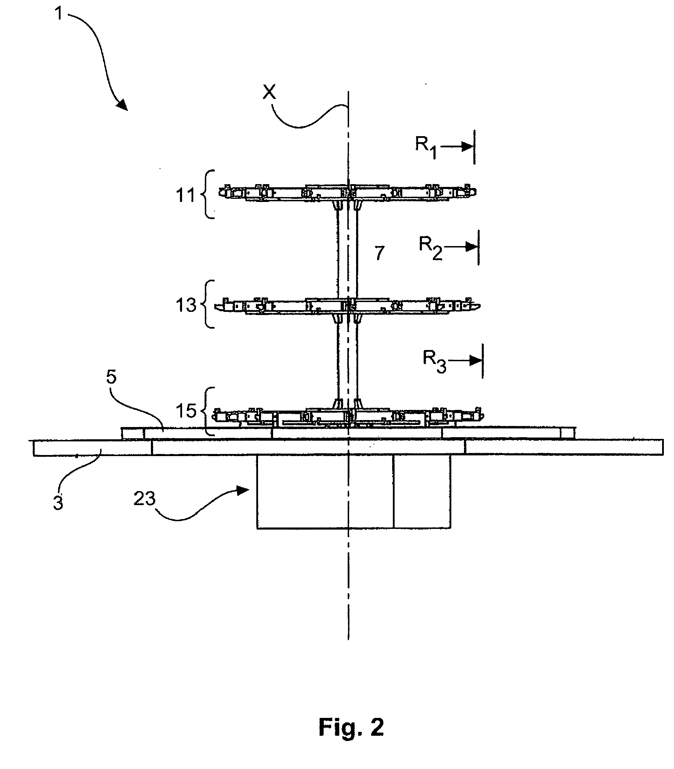

Fig. 2 verdeutlicht noch einmal die Anordnung der unterschiedlichen Ebenen 11, 13, 15 übereinander in der Vorrichtung 1. Unter dem Begriff der Ebene ist hierbei nicht die strikt geometrisch horizontale Ausrichtung der Speichen zu verstehen, sondern die Anordnung ähnlich verschiedener Plattformen in Bauwerken oder auf Gerüsten. In dem in Fig. 1 und 2 gezeigten Ausführungsbeispiel sind die Streben allerdings tatsächlich im Wesentlichen senkrecht zu der Rotationsachse X der Tragstruktur 7 ausgerichtet.

Die Speichen der ersten Ebene 11 definieren durch ihre radial äußersten Punkte einen Radius R1. Die Speichen der zweiten Ebene 13 definieren analog einen Radius R2, und die Speichen der dritten Ebene 15 definieren analog einen Radius R3. In Fig. 2 ist ferner dargestellt, dass unterhalb der stationären Plattform 3 eine Einhausung 23 vorgesehen ist. Innerhalb der Einhausung 23 sind vorzugsweise die Antriebseinheiten für die Tragstruktur 7 sowie eine zentrale Antriebseinheit oder eine elektronische Steuereinheit zum Steuern mehrerer dezentraler Antriebseinheiten (nicht dargestellt) angeordnet.

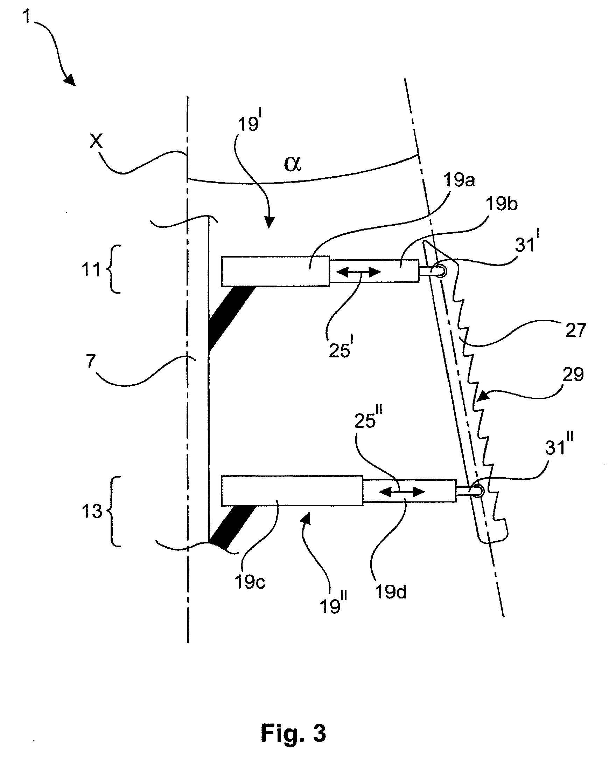

Fig. 3 zeigt einen Ausbruch aus der Vorrichtung gemäß Fig. 2 in schematischer Darstellung. Die Darstellung beschränkt sich auf eine Speiche 19', die in der ersten Ebene 11 angeordnet ist, sowie eine Speiche 19", die in der zweiten Ebene 13 angeordnet ist.

Während zur übersichtlicheren Darstellung der Tragstruktur und der Speichenanordnung in den Fig. 1 und 2 die Stangen zur Aufnahme der Bewehrungslitzen noch ausgeblendet waren, ist in Fig. 3 beispielhaft eine Stange 27 in montierter Lage abgebildet. Die Stange 27 ist in der gezeigten Stellung in einem Winkel α zu der vertikalen Achse X ausgerichtet. Übertragen auf sämtliche Stangen an einer erfindungsgemäßen Vorrichtung bedeutet dies, dass die Stangen konisch aufeinander zu laufen. Der Winkel α ist durch die unterschiedliche Länge eines Grundkörpers 19a der Speiche 19' und einer hiervon abweichenden Länge des Grundkörpers 19c der Speiche 19" vorgebbar. Sind die Teleskopelemente 19b, 19d der Schienen 19', 19" vollständig eingefahren, ergibt sich der Winkel aus dem Abstand der Speichen 19' und 19" zueinander in Richtung der Achse X sowie der unterschiedlichen Länge der Körper 19a, 19c. Alternativ ist der Winkel verstellbar, indem das Teleskopglied 19b der Speiche 19' um einen unterschiedlichen Betrag in Richtung des Pfeils 25' verfahren wird als das Teleskopglied 19d der Speiche 19" in Richtung des Pfeils 25".

Wie In Fig. 3 ferner zu erkennen ist, weist die Stange 27 eine Vielzahl von Aufnahmen 29 zur Führung von Bewehrungslitzen auf. Die Stange 27 ist in der jeweiligen Ebene 11, 13 mittels eines Kuppelglieds 31', 31" mit dem korrespondierenden Teleskopglied 19b, 19d der Speichen 19', 19" schwenkbar verbunden. Falls die Vorrichtung dazu ausgelegt wird, die Längenverstellungen der Speichen 19', 19" in Richtung der Pfeile 25', 25" voneinander unterschiedlich auszuführen, sind in der Stange 27 vorzugsweise Langlochführungen für die Aufnahme zu den Koppelgliedern 31', 31" vorgesehen, um der sich ergebenden Änderung des Winkels α Rechnung zu tragen.

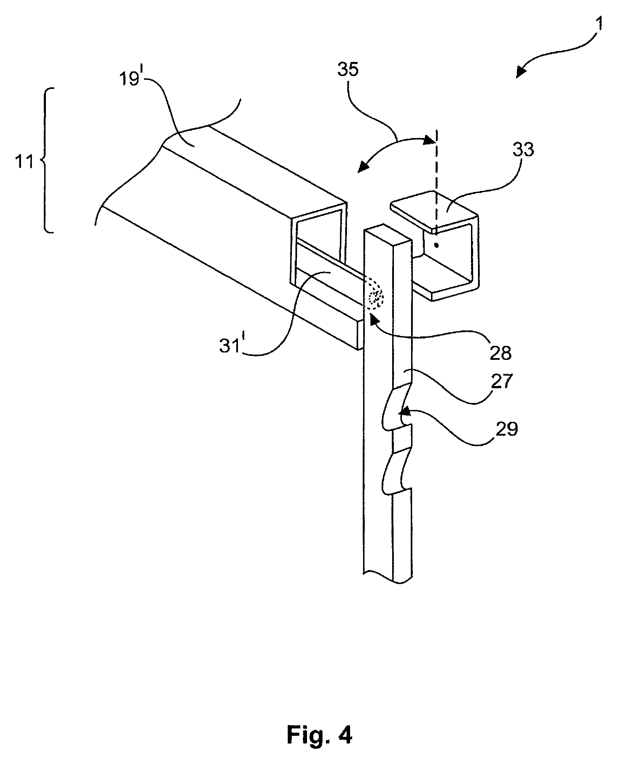

Fig. 4 zeigt am Beispiel einer exemplarischen Speiche 19' in der Ebene 11 einen weiteren Aspekt bei der erfindungsgemäßen Vorrichtung 1. An einem radial äußeren Ende des Speiche 19' erstreckt sich das Koppelglied 31' außerhalb der Speiche 19'. Das Koppelglied 31 ist in einem Abschnitt 28 schwenkbar mit der Stange 27 gekoppelt. Zwischen der Speiche 19' und der Stange 27 ist ein Spalt ausgebildet. Die Breite des Spaltes entspricht im Wesentlichen der Breite (in radialer Richtung) eines Sperrkörpers 33. Der Sperrkörper 33 ist in Fig. 4 in einer Freigabeposition abgebildet. Zum Verhindern einer Schwenkbewegung des Kuppelglieds 31' und somit zum Fixieren des Abstandes der Stange zu der (nicht dargestellten) Tragstruktur ist der Sperrkörper 33 aus der gezeigten Freigabeposition in eine Sperrposition bringbar. Dies geschieht gemäß dem bevorzugten Ausführungsbeispiel mittels einer Verschwenkbewegung in Richtung des Pfeils 35. Der Sperrkörper wird mittels der Schwenkbewegung in Anlage mit der Speiche 19' und der Stange 27 gebracht. Optional ist eine Verriegelung vorgesehen. Die Schwenkbewegung wird optional mittels eines Stellmotors oder einer mechanischen Auslenkung wie beispielsweise einem Seilzug ausgeführt. In der Sperrposition ist der radiale Abstand der Aufnahmen 29 im Bezug auf die Rotationsachse X der Tragstruktur 7 (siehe Fig. 2) fixiert und wird während des Betriebs der Vorrichtung 1 konstant gehalten, wodurch eine gleichförmige Ausbildung des Bewehrungskorbs sichergestellt wird.

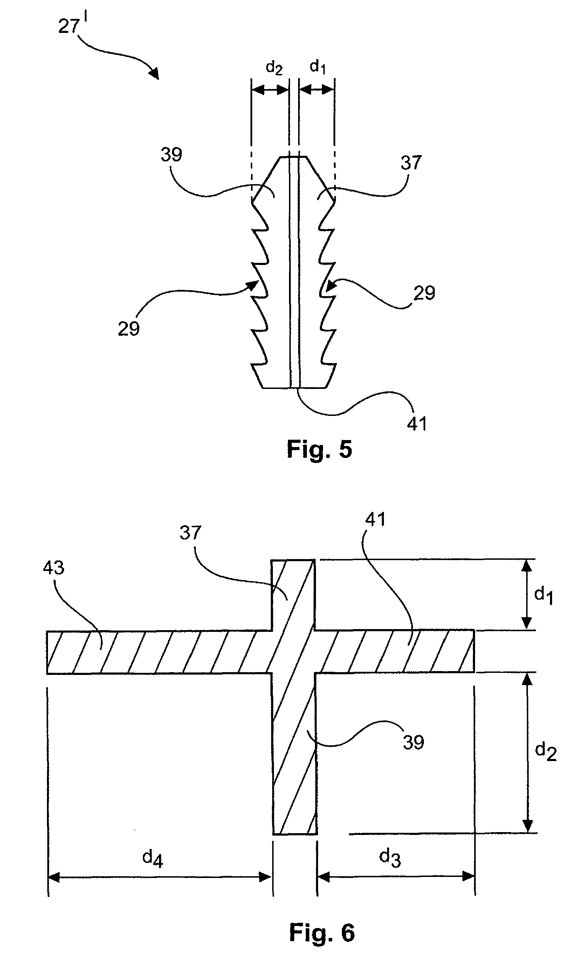

Die Fig. 5 und 6 zeigen eine Variante 27' der Stange, welche die Ausnahmen 29 aufweist. Die Stange 27' weist als Basis einen länglichen Vierkantkörper auf, von dessen vier länglichen Seiten sich jeweils eine Flanke mit einer Vielzahl von Ausnehmungen 29 fort erstreckt. Hierbei weist eine erste Flanke 37 die Flankenhöhe d1 auf. Im Unterschied zu dieser Flankenhöhe d1 weist die zweite Flanke 39 eine von der Flankenhöhe d1 verschiedene Flankenhöhe d2 auf. Eine dritte Flanke 41 weist die Flankenhöhe d3 auf, während eine vierte Flanke 43 die Flankenhöhe d4 aufweist. Die Flankenhöhen d1, d2, d3, d4 sind jeweils voneinander verschieden. Die Stange 27' ist derart mit den Speichen der Vorrichtung koppelbar, dass eine der vier Flanken 37, 39, 41, 43 sich von der Rotationsachse X der Tragstruktur 7 abwendet, so dass nur diese Flanke in Eingriff mit den Bewehrungslitzen gebracht wird. Durch die unterschiedlichen Flankenhöhen sind auch mittels der in den vier verschiedenen Winkelstellungen positionierbaren Stangen 27' unterschiedliche äußere Durchmesser bzw. Kreisumfänge für die aufzunehmenden Bewehrungslitzen vorgebbar. Die Stange 27' ermöglicht somit eine schnelle Justierung des Bewehrungskorb-Durchmessers in einem engen Bereich, ohne hierfür explizit Steuereingriffe der Antriebseinheit zur motorischen Längenverstellung der Speichen vornehmen zu müssen.

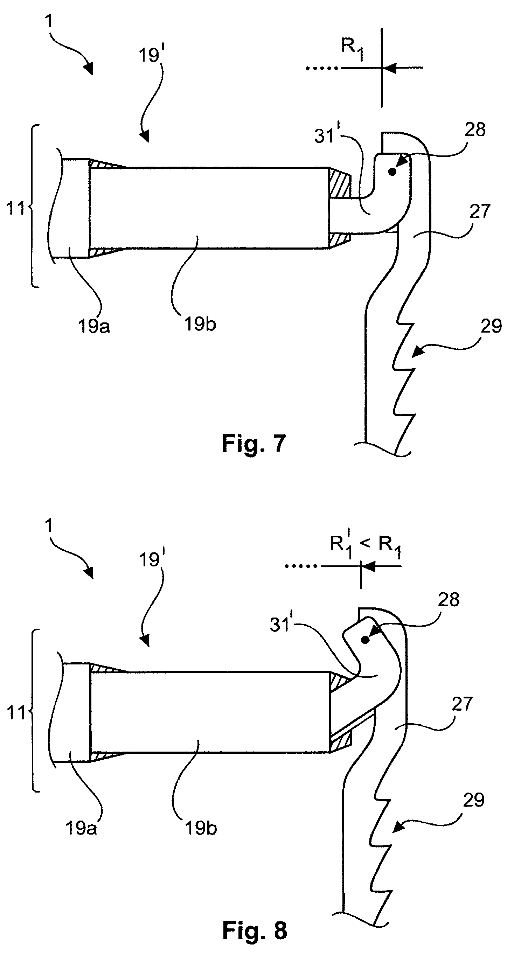

In Fig. 7 ist in Bezug auf eine exemplarische Speiche 19' ein weiteres Detail gemäß eines bevorzugten Ausführungsbeispiels der Erfindung abgebildet. Das Teleskopglied 19b ist um eine bestimmte Länge aus dem Grundkörper 19a der Speiche 19' ausgefahren. Das Koppelglied 31' erstreckt sich aus dem Teleskopglied 19b heraus und ist in dem Punkt 28 mit der Stange 27 gekoppelt. Hierbei definiert die Aufnahme 28 einen radialen Abstand R1 von der Achse X (nicht dargestellt). In dem in Fig. 7 gezeigten Zustand befindet sich die Vorrichtung 1 in einer Stellung, in welcher die Aufnahme der Bewehrungslitzen erfolgen kann oder erfolgt bzw. bereits erfolgt ist. Dieser Zustand, in welchem die Stabilisierung der Bewehrungslitzen gewährleistet sein muss, ist R1 konstant. Nach erfolgter Herstellung des Bewehrungskorbes, also nach Verknüpfen der kreisförmigen Bewehrungslitzen mit den zusätzlichen Versteifungselementen, wird die Vorrichtung 1 in einen Zustand gemäß Fig. 8 überführt. In dem Zustand gemäß Fig. 8 ist das Koppelglied 31' nach oben verschwenkt. Die gleichen Bewegungen führen auch die übrigen, nicht dargestellten Koppelglieder in den anderen Ebenen der Vorrichtung aus. Hierdurch wird die Stange 27 sowohl nach oben (bezogen auf die Ausrichtung von Fig. 8 in Richtung der Achse X, Fig. 2) bewegt und gleichzeitig in Richtung auf die Achse X zu nach innen versetzt. Der radiale Abstand, den die Aufnahme 28 nun zur Achse X einnimmt, beträgt R1', welcher kleiner ist als R1. Durch die Verschwenkbewegung der Koppelglieder lösen sich die Bewehrungslitzen aus den Aufnahmen 29, und der hergestellte Bewehrungskorb kann nach oben aus der Vorrichtung 1 entnommen werden. Die Ausführung der Speichen mit schwenkbaren Koppelgliedern ist deswegen besonders vorteilhaft, weil ein schnelles Lösen der Bewehrungskörbe von der Vorrichtung 1 erfolgen kann, ohne hierzu die Länge der motorisch verstellten Speichen durch Steuerbefehle ändern zu müssen. Die Koppelglieder können mittels separater, rein mechanischer Aktuation aus der Stellung gemäß Fig. 7 in die Stellung gemäß Fig. 8 geschwenkt werden, während die Länge der Speichen unverändert bleibt.

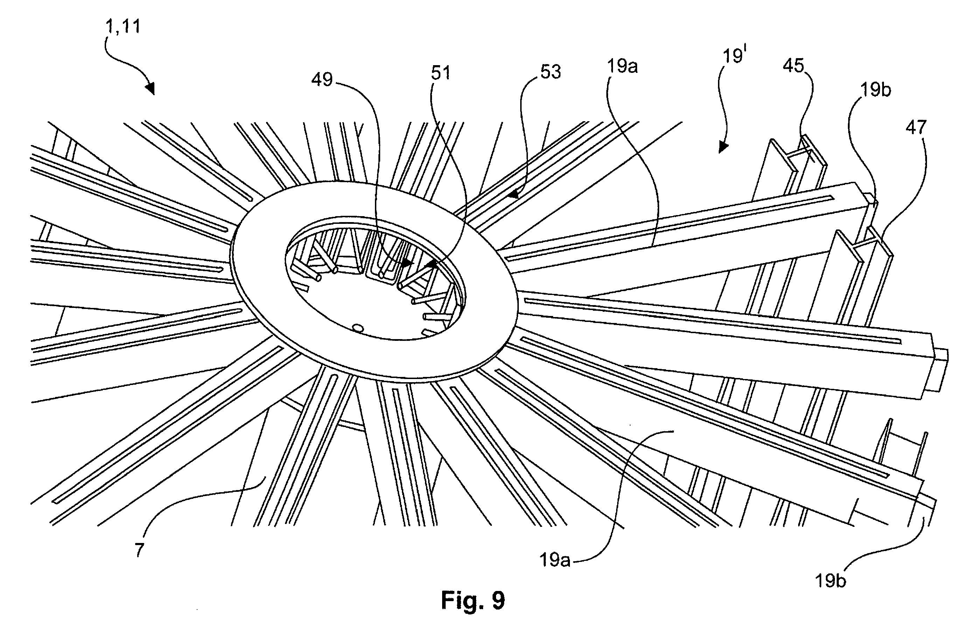

In Fig. 9 ist schließlich gemäß einem weiteren Ausführungsbeispiel der Erfindung eines der verschiedenen erfindungsgemäßen Antriebskonzepte vorgestellt. Gezeigt ist ein Blick von schräg oben auf die obere Ebene 11 der Vorrichtung 1. Die Teleskopglieder 19b der Speichen 19' sind translatorisch innerhalb der Grundkörper 19a verfahrbar. Zum Ausführen der Translationsbewegung ist in jeder Speiche eine dezentrale Antriebseinheit 49 angeordnet. In dem Beispiel gemäß Fig. 9 ist die dezentrale Antriebseinheit 49 als Teleskopspindelantrieb 51 ausgebildet, mittels dessen Betätigung ein Schlitten 53 eine durch eine Längsnut geführte Translationsbewegung ausführt. Das Teleskopglied 19b ist mit dem Schlitten 53 gekoppelt und wird infolge der Betätigung des Teleskopantriebs 51 motorisch aus- oder eingefahren. Zum seitlichen Abstützen und Aufnehmen von Lagerkräften sind an mehreren der Speichen links und rechts Stützstreben 45, 47 angeordnet.

## Patentansprüche

1. Vorrichtung (1) zur Herstellung von Bewehrungskörben für Turmsegmente, insbesondere für Turmsegmente von Windenergieanlagen, mit
- einer Tragstruktur (7), die um eine Achse X rotatorisch antreibbar ist,
- einer Vielzahl von Stangen (27, 27'), die parallel oder konisch aufeinander zulaufend, relativ zu der Achse X ausgerichtet und entlang eines Umfangs vorzugsweise gleichmäßig um die Tragstruktur (7) herum verteilt sind,
wobei
- jede der Stangen mittels zwei oder mehr Speichen (19) mit der Tragstruktur verbunden ist, und an ihrer äußeren, von der Tragstruktur abgewandten Seite eine Vielzahl von Aussparungen (29) aufweist, welche zur Aufnahme von Bewehrungsmaterial eingerichtet sind,
- jeweils eine Anzahl von Speichen entsprechend der Anzahl der Stangen in einer Ebene (11, 13, 15) senkrecht zu der Achse X angeordnet sind, und
- die Speichen teleskopartig in ihrer Länge motorisch verstellbar sind.

2. Vorrichtung (1) nach Anspruch 1,
wobei die Länge jeweils aller Speichen in einer Ebene synchron verstellbar ist.

3. Vorrichtung (1) nach Anspruch 1 oder 2,
wobei die Länge der Speichen stufenlos verstellbar ist.

4. Vorrichtung (1) nach einem der vorstehenden Ansprüche,
mit einer zentralen Antriebseinheit, oder einer zentralen Antriebseinheit für jede Ebene von Speichen, zum motorischen Verstellen der Speichen, an welche für jede Speiche ein Getriebe gekoppelt ist, welches von der Antriebseinheit synchron antreibbar ist.

5. Vorrichtung (1) nach Anspruch 4,
wobei die Antriebseinheit eine Welle mit einem oder mehreren Zahnrädern aufweist, und die Getriebe der Speichen jeweils mittels Rollenketten an die Welle gekoppelt sind.

6. Vorrichtung (1) nach Anspruch 4,
wobei die Antriebseinheit ein Hydraulikantrieb ist und jede Speiche einen hydraulisch betätigten, von dem Hydraulikantrieb mit Druck beaufschlagbaren Kolben zur Längenverstellung aufweist.

7. Vorrichtung (1) nach einem der Ansprüche 1 bis 3,
mit einem dezentralen Antriebssystem zur motorischen Längenverstellung, derart, dass jede Speiche eine eigene Antriebseinheit (49) aufweist.

8. Vorrichtung (1) nach Anspruch 7,
wobei die jeweilige Antriebseinheit für alle Speichen in einer Ebene von einer elektronischen Steuereinheit synchron gesteuert wird.

9. Vorrichtung (1) nach Anspruch 7 oder 8
wobei jede Speiche einen Teleskopspindelantrieb (51), einen magnetischen Linearantrieb, oder einen Zahnstangenantrieb aufweist.

10. Vorrichtung (1) nach einem der vorstehenden Ansprüche,
wobei die elektronische Steuereinheit dazu eingerichtet ist, die zentrale Antriebseinheit, oder die Antriebseinheit für jede Ebene von Speichen, oder jede der dezentralen Antriebseinheiten derart anzusteuern, dass jede Ebene von Speichen einen vorbestimmten Kreisdurchmesser am äußeren Ende der Speichen definiert.

11. Vorrichtung (1) nach einem der vorstehenden Ansprüche,
wobei die Stangen durch Entkoppeln von allen bis auf jeweils eine Speiche aus ihrer im Bezug auf die Tragstruktur parallelen Lage in eine angewinkeite Lage klappbar sind.

12. Vorrichtung (1) nach einem der vorstehenden Ansprüche,
wobei die Stangen mittels jeweils eines Koppelglieds (31', 31") an den Speichen befestigt sind, wobei die Koppelglieder zum Verschwenken der Stangen in Richtung der Achse X und simultan zur Verringerung des Umfangs eingerichtet sind, entlang dessen die Stangen angeordnet sind.

13. Vorrichtung (1) nach Anspruch 12,
wobei pro Ebene der Speichen zwei oder mehr, vorzugsweise alle, Koppelglieder motorisch zur Ausführung der Verschwenkbewegung antreibbar sind.

14. Vorrichtung (1) nach Anspruch 12 oder 13,
wobei pro Stange mindestens ein Koppelglied mittels eines Sperrkörpers (33) blockierbar ist, wobei der Sperrkörper wahlweise in eine Sperrposition oder eine Freigabeposition bewegbar ist, vorzugsweise mittels Verschwenken.

15. Vorrichtung (1) nach Anspruch 14,
wobei der Sperrkörper dazu eingerichtet ist, sich in der Sperrposition bogenförmig um das Koppelglied (31') herum zu erstrecken und einen Spalt zwischen Speiche (19') und Stange (27) zu verschließen.

## Claims

1. An apparatus (1) for producing reinforcement cages for pylon segments, in particular for pylon segments of wind power installations, comprising
- a carrier structure (7) which is drivable in rotation about an axis X,
- a plurality of bars (27, 27') which are oriented in parallel or mutually conically converging relationship relative to the axis X and are distributed along a periphery preferably uniformly around the carrier structure (7),
wherein
- each of the bars is connected to the carrier structure by means of two or more spokes (19) and at its outer side remote from the carrier structure has a plurality of recesses (29) adapted to receive reinforcement material,
- a respective plurality of spokes are arranged in accordance with the number of bars in a plane (11, 13, 15) perpendicularly to the axis X, and
- the spokes are adjustable telescopically in their length by motor means.

2. Apparatus (1) according to claim 1 wherein the length of all respective spokes is synchronously adjustable in a plane.

3. Apparatus (1) according to claim 1 or claim 2 wherein the length of the spokes is steplessly adjustable.

4. Apparatus (1) according to one of the preceding claims comprising a central drive unit or a central drive unit for each plane of spokes, for motor adjustment of the spokes, to which there is coupled for each spoke a transmission synchronously drivable by the drive unit.

5. Apparatus (1) according to claim 4 wherein the drive unit has a shaft with one or more gears and the transmissions of the spokes are respectively coupled to the shaft by means of roller chains.

6. Apparatus (1) according to claim 4 wherein the drive unit is a hydraulic drive and each spoke has a hydraulically actuated piston which can be acted upon with pressure by the hydraulic drive for length adjustment.

7. Apparatus (1) according to one of claims 1 to 3 comprising a decentral drive system for motor length adjustment in such a way that each spoke has its own drive unit (49).

8. Apparatus (1) according to claim 7 wherein the respective drive unit for all spokes in a plane is synchronously controlled by an electronic control unit.

9. Apparatus (1) according to claim 7 or claim 8 wherein each spoke has a telescopic spindle drive (51), a magnetic linear drive or a toothed rack drive.

10. Apparatus (1) according to one of the preceding claims wherein the electronic control unit is adapted to actuate the central drive unit or the drive unit for each plane of spokes or each of the decentral drive units in such a way that each plane of spokes defines a predetermined circle diameter at the outer end of the spokes.

11. Apparatus (1) according to one of the preceding claims wherein the bars are foldable out of their position of being parallel with respect to the carrier structure into an angled position by decoupling of all down to a respective spoke.

12. Apparatus (1) according to one of the preceding claims wherein the bars are fixed to the spokes by means of a respective coupling member (31', 31"), wherein the coupling members are adapted for pivotal movement of the bars in the direction of the axis X and simultaneously for reducing the periphery, along which the bars are arranged.

13. Apparatus (1) according to claim 12 wherein for each plane of the spokes two or more and preferably all coupling members are drivable by motor means for performing the pivotal movement.

14. Apparatus (1) according to claim 12 or claim 13 wherein for each bar at least one coupling member is blockable by means of a locking body (33), wherein the locking body is movable selectively into a locking position or a release position, preferably by means of pivotal movement.

15. Apparatus (1) according to claim 14 wherein the locking body is adapted to extend in the locking position arcuately around the coupling member (31') and to close a gap between spoke (19') and bar (27).

## Revendications

1. Dispositif (1) pour la fabrication de cages d'armature pour des segments de tour, en particulier pour des segments de tour d'éolienne avec
- une structure portante (7) qui peut être entraînée en rotation autour d'un axe X,
- une pluralité de tiges (27, 27') qui sont parallèles ou convergentes en cône l'une vers l'autre, orientées par rapport à l'axe X et réparties le long d'une périphérie de préférence uniformément autour de la structure porteuse (7),
- chacune des tiges étant reliée à l'aide de deux rayons (19) ou plus à la structure porteuse, et sur son côté extérieur éloigné de la structure porteuse présentant une pluralité d'évidements (29) qui sont aménagés pour la réception de matériau d'armature,
- respectivement un nombre de rayons étant agencé selon le nombre des tiges dans un plan (11, 13, 15) perpendiculairement à l'axe X et
- les rayons étant réglables par moteur de manière télescopique dans leur longueur.

2. Dispositif (1) selon la revendication 1,
la longueur respectivement de tous les rayons étant réglable de manière synchrone dans un plan.

3. Dispositif (1) selon la revendication 1 ou 2,
la longueur des rayons étant réglable en continu.

4. Dispositif (1) selon l'une quelconque des revendications précédentes,
avec une unité d'entraînement centrale ou une unité d'entraînement centrale pour chaque plan de rayons pour le réglage motorisé des rayons, à laquelle pour chaque rayon un engrenage est couplé, lequel peut être entraîné de manière synchrone par l'unité d'entraînement.

5. Dispositif (1) selon la revendication 4,
l'unité d'entraînement présentant un arbre avec une ou plusieurs roues dentées et l'engrenage des rayons étant couplé respectivement à l'aide de chaînes à rouleaux à l'arbre.

6. Dispositif (1) selon la revendication 4,
l'unité d'entraînement étant un entraînement hydraulique et chaque rayon présentant un piston actionné hydrauliquement, pouvant être alimenté en pression par l'entraînement hydraulique pour le réglage en longueur.

7. Dispositif (1) selon l'une quelconque des revendications 1 à 3,
avec un système d'entraînement décentralisé pour le réglage en longueur motorisé de telle manière que chaque rayon présente une unité d'entraînement propre (49).

8. Dispositif (1) selon la revendication 7,
l'unité d'entraînement respective pour tous les rayons étant commandée de manière synchrone dans un plan par une unité de commande électronique.

9. Dispositif (1) selon la revendication 7 ou 8,
chaque rayon présentant un entraînement par broche télescopique (51), un entraînement linéaire magnétique ou un entraînement par crémaillère.

10. Dispositif (1) selon l'une quelconque des revendications précédentes,
l'unité de commande électronique étant aménagée afin de commander l'unité d'entraînement centrale ou l'unité d'entraînement pour chaque plan de rayons ou chacune des unités d'entraînement décentralisées de telle manière que chaque plan de rayons définisse un diamètre circulaire prédéterminé sur l'extrémité extérieure des rayons.

11. Dispositif (1) selon l'une quelconque des revendications précédentes,
les tiges étant rabattables par découplage de tous jusqu'à respectivement un rayon depuis leur position parallèle par rapport à la structure porteuse dans une position coudée.

12. Dispositif (1) selon l'une quelconque des revendications précédentes,
les tiges étant fixées respectivement à l'aide d'un organe de couplage (31', 31") sur les rayons, les organes de couplage étant aménagés pour le pivotement des tiges en direction de l'axe X et simultanément à la diminution de la périphérie, le long de laquelle les tiges sont disposées.

13. Dispositif (1) selon la revendication 12,
deux ou plus, de préférence tous les organes de couplage pouvant être entraînés par plan des rayons par moteur pour la réalisation du mouvement pivotant.

14. Dispositif (1) selon la revendication 12 ou 13,
au moins un organe de couplage pouvant être bloqué par tige à l'aide d'un corps de verrouillage (33), le corps de verrouillage étant mobile au choix dans une position de verrouillage ou une position de libération, de préférence par pivotement.

15. Dispositif (1) selon la revendication 14,
le corps de verrouillage étant aménagé afin de s'étendre dans la position de verrouillage en forme d'arc autour de l'organe de couplage (31') et de fermer une fente entre le rayon (19') et la tige (27).
